# EUROPEAN PATENT APPLICATION

(11) **EP 1 708 117 A2**
(43) Date of publication of application: **04.10.2006**
(21) Application number: 06251350.2
(22) Date of filing: 14.03.2006
(51) Int. Cl.: G06F 21/00

(54) **Computer system, storage device, computer software, and storage administrator authentication method**

(30) Priority: 24.03.2005 JP 2005085787
(71) Applicant: HITACHI, LTD., Chiyoda-ku Tokyo 100-8280 (JP)
(72) Inventor: Kinoshita, Junji c/o Hitachi, Ltd, Chiyoda-ku Tokyo 100-8220 (JP); Iwasaki, Masaaki c/o Hitachi, Ltd, Chiyoda-ku Tokyo 100-8220 (JP)
(74) Representative: Hodsdon, Stephen James

(57) **Abstract**

A computer system that can authenticate a user to handle the management of a logical volume and that can restrict logical-volume management operation instructions and management operation objects according to the right given to the user is provided. A computer system includes a computer (40) and a storage device (1) connected to the computer via a network (30). The computer sends user authentication information so that it is written into a specific area of a specific logical volume (20) of the storage device. The storage device authenticates the user based on the user authentication information stored in the specific area of the specific logical volume.

## Description

The present invention relates to a computer system, a storage device, computer software, and a storage administrator authentication method, and more particularly, but not exclusively, to a storage device that enables user authentication and user right authorization.

A storage device (hereinafter also referred to as a "disk array device") is connected to a computer (hereinafter also referred to as a "host") by a storage area network (SAN). As means for implementing SAN, FC-SAN using fibre channel (FC), IP-SAN using transmission control protocol/internet protocol (TCP/IP) and internet small computer system interface (iSCSI) are available.

A plurality of logical volumes are formed in a disk array device, and a plurality of hosts connected to the SAN read or write data from or into the logical volumes in the disk array device.

The reading or writing of data from or into the logical volumes in the disk array device via FC-SAN or IP-SAN is implemented by data transfer using SCSI commands.

In addition to the reading or writing data from or into the logical volumes, the hosts have to issue logical-volume management operation instructions, for example, an instruction to copy a logical volume in case of a failure, to the disk array device.

As disclosed in Japanese Unexamined Patent Application Publication No. 2000-112666, the issuance of logical-volume management operation instructions to the disk array device is implemented by reading or writing data from or into a specific logical volume (hereinafter also referred to as a "control volume"). According to this method, by reading or writing data from or into the control volume, hosts having various platforms on the SAN can easily issue logical-volume management operation instructions to the disk array device without the need to provide a specific interface for issuing logical-volume management operation instructions for the hosts.

In the above-described known art, the user of a host on the SAN who can read or write data from or into a plurality of logical volumes in the disk array device can freely handle the management of the logical volumes.

However, a malicious user may handle the management of the logical volumes in order to destroy data. Thus, the logical-volume management operation should be restricted only to highly authorized users, such as a host administrator or a storage administrator.

Since the disk array device is used by a plurality of hosts on the SAN, a malicious user of one host on the SAN may handle the logical volume of another host on the SAN to destroy data. Accordingly, it is necessary to restrict the content or the object of management operation in accordance with the right given to a user.

Accordingly, it is a purpose of the present invention to provide a computer system, a storage device, computer software, and a storage administrator authentication method that can authenticate a user to handle the management of logical volumes and that can restrict logical-volume management operation instructions and management operation objects in accordance with the right given to the user.

In order to preferably achieve the above-described object, a disk array device preferably has a function of conducting user authentication and user right authorization by reading or writing data from or into a control volume. A host sends an authentication request instruction including user authentication information or a logical-volume management operation instruction by writing data into a specific area of the control volume in the disk array device. The disk array device conducts user authentication or user right authorization based on the user authentication information sent from the host. The host receives a user authentication result or a logical-volume management operation result from the disk array device by reading data from a specific area of the control volume in the disk array device.

That is, an aspect of the present invention provides a computer system including a computer, and a storage device connected to the computer via a network. The computer sends user authentication information for authenticating a user of the computer so that the user authentication information is written into a specific area of a specific logical volume in the storage device, and the storage device authenticates the user based on the user authentication information stored in the specific area of the specific logical volume in the storage device.

According to aspects of the present invention, authentication is conducted on a user of a host to handle the management of logical volumes by reading or writing data from or into a control volume in a disk array device. It is thus possible to authorize the content or the object of logical-volume management operation according to the right given to the user.

### BRIEF DESCRIPTION OF THE DRAWINGS

Fig. 1 is a block diagram illustrating an example of the overall configuration of a storage system according to an embodiment of the present invention;
Fig. 2 is a block diagram illustrating an example of the configuration of programs and data in an embodiment of the present invention;
Fig. 3 illustrates an example of the address space of a control volume in a disk array device in an embodiment of the present invention;
Fig. 4A illustrates an example of a command frame sent from a host to the disk array device in an embodiment of the present invention;
Fig. 4B illustrates an example of the data structure of an authentication request instruction or a logical-volume management operation instruction sent from the host to the disk array device;
Fig. 4C illustrates an example of the data structure of a user authentication result or a logical-volume management operation result received by the host from the disk array device;
Fig. 4D illustrates an example of the data format of error flags;
Fig. 5 illustrates an example of an authentication information table in an embodiment of the present invention;
Fig. 6 illustrates an example of an authorization information table in an embodiment of the present invention;
Fig. 7 illustrates an example of a setting information table in an embodiment of the present invention;
Fig. 8A is a flowchart illustrating dispatch processing for a command frame sent from the host to the disk array device in an embodiment of the present invention;
Fig. 8B is a flowchart illustrating an example of write command processing in an embodiment of the present invention;
Fig. 8C is a flowchart illustrating an example of read command processing in an embodiment of the present invention;
Fig. 9A is a flowchart illustrating an example of session ID processing in an embodiment of the present invention;
Fig. 9B is a flowchart illustrating an example of user authentication processing in a first embodiment of the present invention;
Fig. 10A is a flowchart illustrating an example of management operation completion request processing in the first embodiment of the present invention;
Fig. 10B is a flowchart illustrating an example of logical-volume management handing instruction processing in an embodiment of the present invention;
Fig. 11A is a flowchart illustrating user authentication processing in a second embodiment of the present invention; and
Fig. 11B is a flowchart illustrating management operation completion request processing in the second embodiment of the present invention.

The best modes to carry out the present invention are described below. However, it should be understood that the present invention is not restricted to such best modes.

### First Embodiment

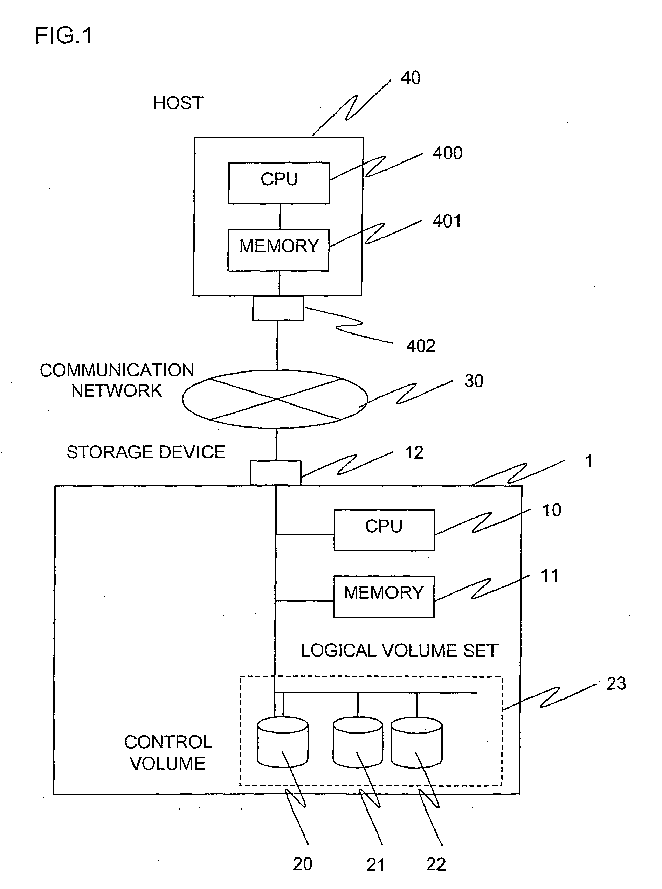

Fig. 1 illustrates an example of the configuration of a storage system according to a first embodiment of the present invention. A storage device 1 is a disk array device. A host 40 is a computer connected to the storage device 1 via a communication network 30 and accessing data stored in the storage device 1. The communication network 30 is FC-SAN or IP-SAN.

The storage device 1 includes a central processing unit (CPU) 10, a memory 11, a connection port 12, and a logical volume set 23. The CPU 10 is a processor executing, for example, data access processing. Programs executed by the CPU 10 or data used by the programs are stored in the memory 11. The connection port 12 is a network interface for connecting the storage device 1 to the communication network 30.

A logical volume is used for storing data, and the storage device 1 has at least one logical volume. A unique identifier is assigned to each logical volume, and the host 40 can specify the identifier of a logical volume in the storage device 1 to access data stored in that logical volume. One of the logical volumes is used as an interface for performing management operation of the storage device 1, and is referred to as a "control volume" in distinction from the other logical volumes. In this embodiment, the storage device 1 has a control volume 20 and logical volumes 21 and 22.

The host 40 includes a CPU 400, a memory 401, and a connection port 402. The CPU 400 is a processor executing, for example, input/output processing of data into or from the storage device 1. In the memory 401, programs executed by the CPU 400 or data used by the programs are stored. The connection port 402 is a network interface for connecting the host 40 to the communication network 30.

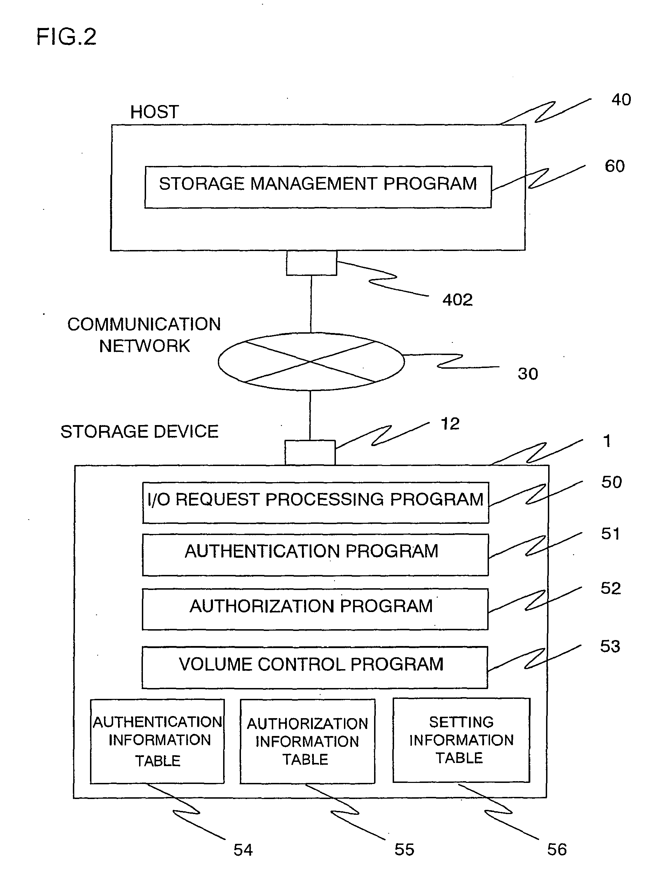

Fig. 2 illustrates programs and data stored in the memory 11 of the storage device 1 and a program and data stored in the memory 401 of the host 40. In the host 40, a storage management program 60 is operated. The storage management program 60 is a program for managing the logical volume set 23 of the storage device 1. For example, a user of the host 40 conducts user authentication or executes management operation, for example, generating or copying logical volumes, by using the storage management program 60. The storage management program 60 sends a user authentication request instruction or a logical-volume management operation instruction to the storage device 1 as data to be written into a specific area of the control volume 20. The storage management program 60 also receives a user authentication result or a logical-volume management operation result from the storage device 1 as data read from a specific area of the control volume 20.

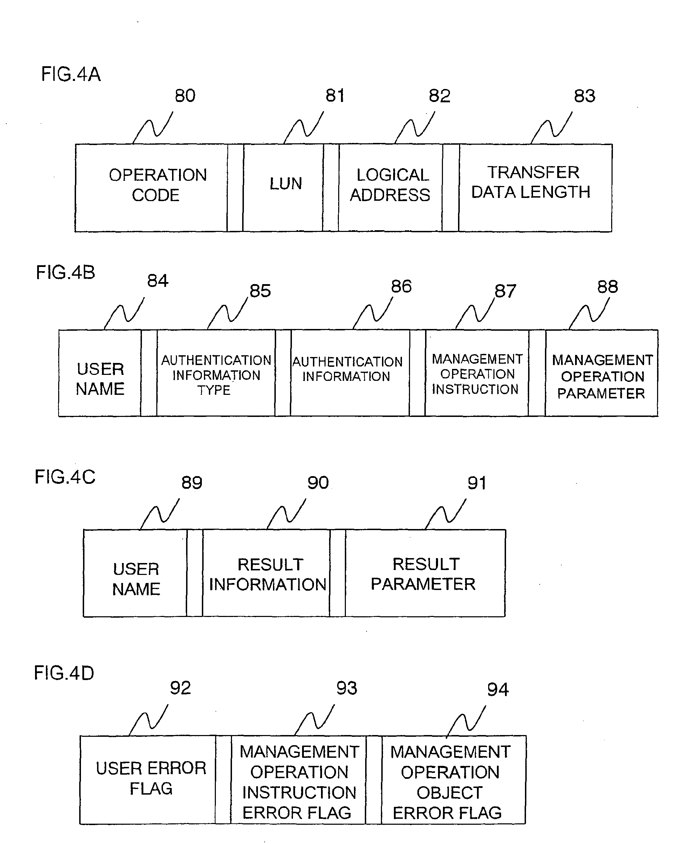

An I/O request processing program 50 is a program for receiving an access request to write data into the logical volume 20, 21, or 22 of the storage device 1 or to read data stored in the logical volume 20, 21, or 22, and for sending or receiving data to or from the host 40 according to the type of request. If the access request from the host 40 is to write data into the specific area of the control volume 20, the I/O request processing program 50 determines that the access request is a user authentication request instruction or a logical-volume management operation instruction, and then delivers the received data to an authentication program 51. If the access request from the host 40 is to read data from the specific area of the control volume 20, the I/O request processing program 50 determines that the access request is a request to send user authentication result or a logical-volume management operation result, and then sends the data stored in the specific area to the host 40. The format of data received from the host 40 and the format of data sent to the host 40 are described below with reference to Figs. 4A through 4D.

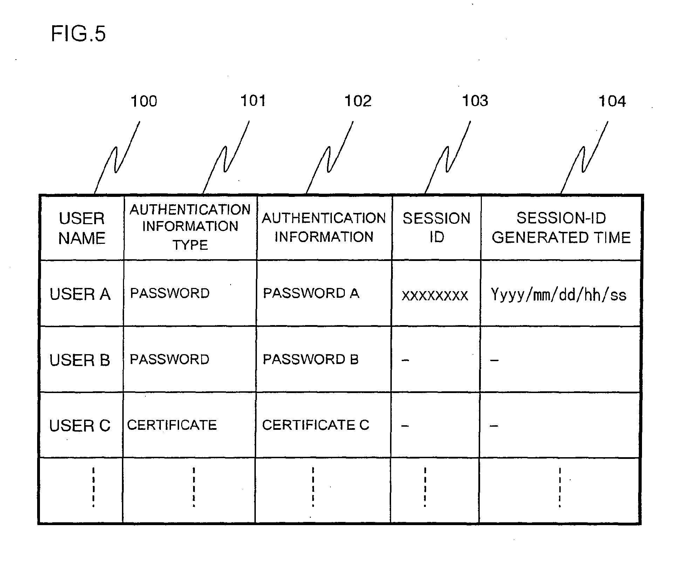

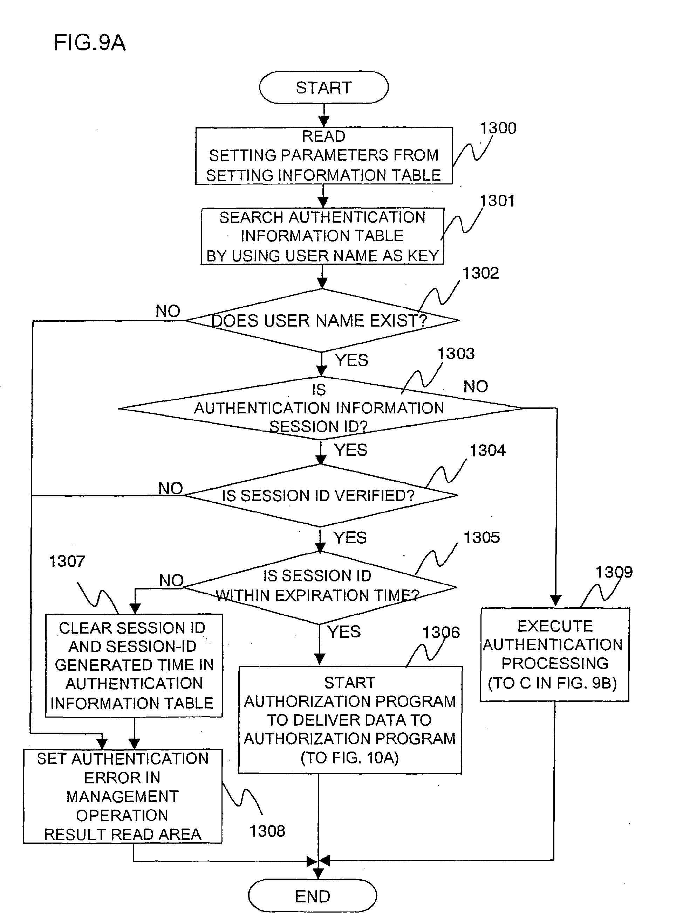

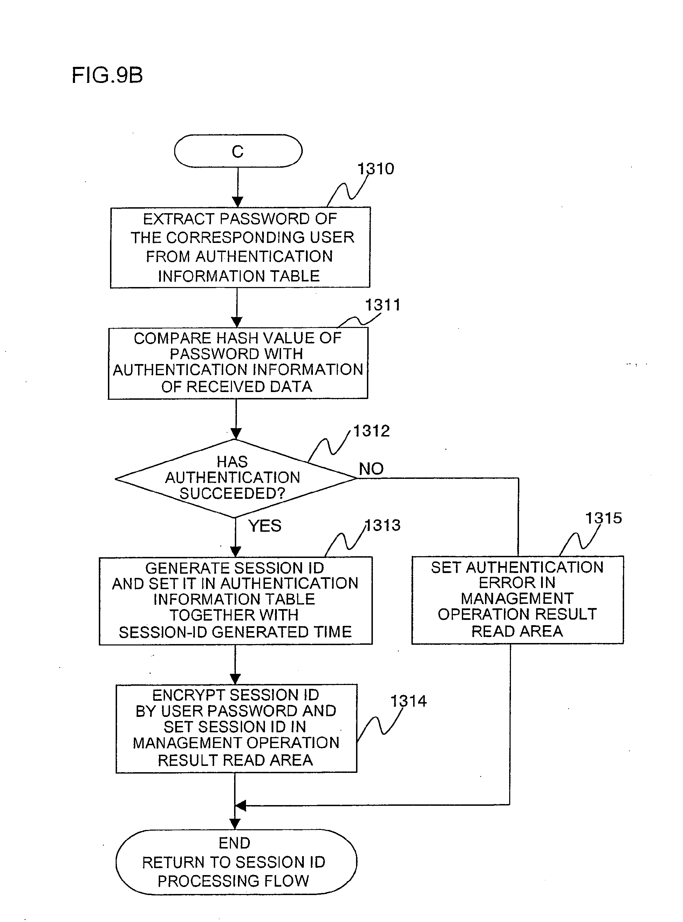

The authentication program 51 is a program for receiving data from the I/O request processing program 50 to verify user authentication information contained in the received data. To verify the user authentication information, the authentication program 51 refers to an authentication information table 54 to check the user authentication information. The format of the authentication information table 54 and a technique for verifying the authentication information are described below with reference to Figs. 5, 9A, and 9B.

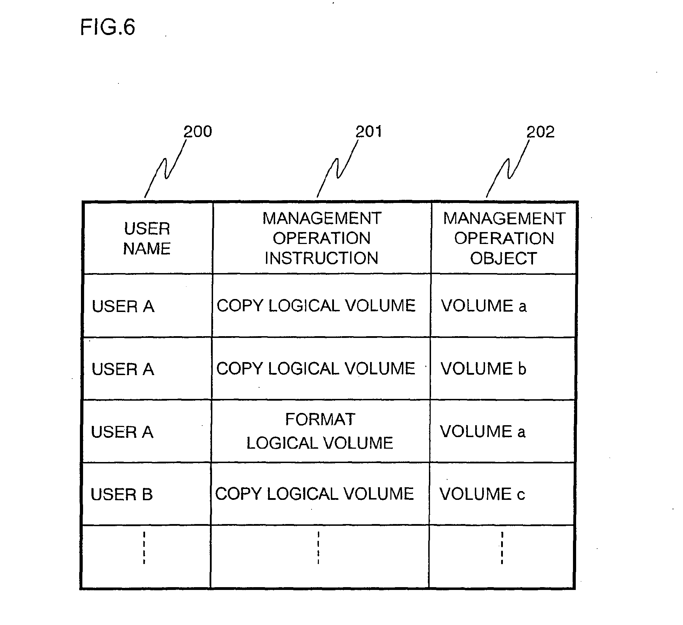

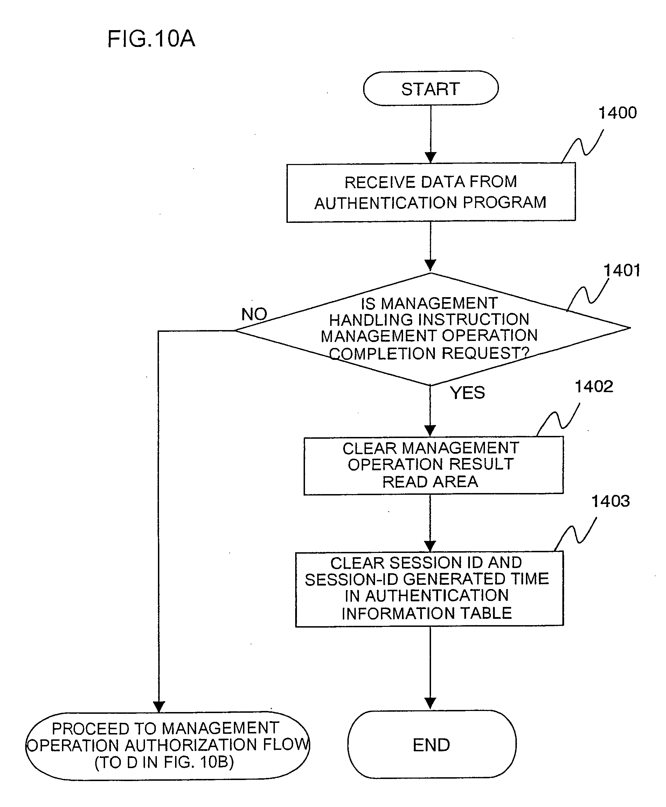

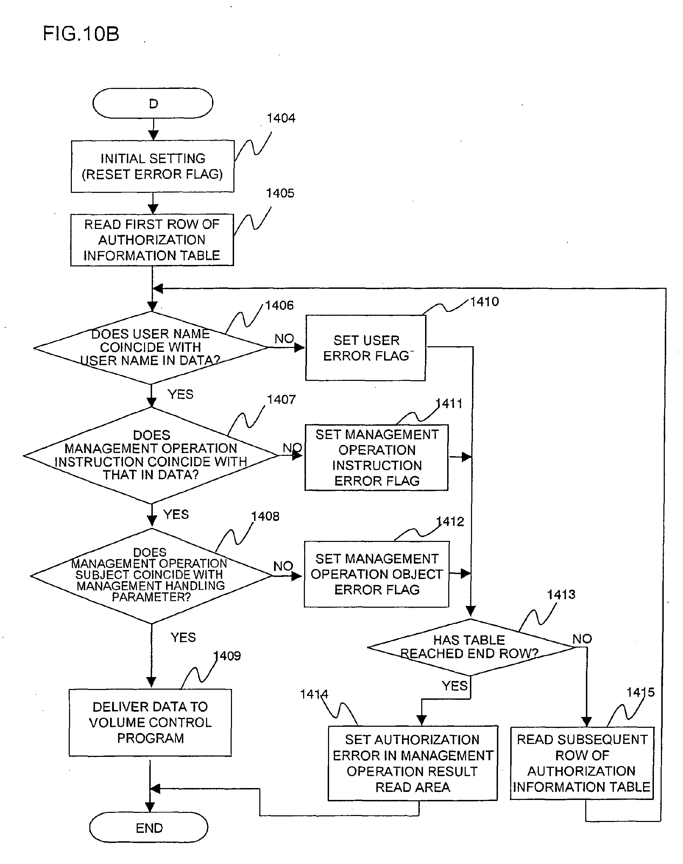

An authorization program 52 is a program for receiving data from the authentication program 51 to verify the right to execute the logical-volume management operation instruction by the user contained in the received data. To verify the right to execute the management operation instruction, the authorization program 52 refers to an authorization information table 55 to check the management operation instruction and the management operation object permitted for the user. The format of the authorization information table 55 and a technique for verifying the user execution right are described below with reference to Figs. 6, 10A, and 10B.

A volume control program 53 is a program for executing logical-volume management operation, such as generating, copying, or formatting a logical volume.

The authentication information table 54 contains user authentication information, and is used when the authentication program 51 verifies the user authentication information. The user authentication information contained in the authentication information table 54 includes information registered by the administrator of the storage device 1 in advance and information dynamically registered by the authentication program 51.

The authorization information table 55 contains logical-volume management operation instructions and management operation objects permitted for the user, and is used when the authorization program 52 verifies the user execution right. The information contained in the authorization information table 55 is information registered by the administrator of the storage device 1 in advance.

A setting information table 56 contains setting parameters required for the operations of the authentication program 51 and the authorization program 52, such as the expiration time of the session ID, and is referred to by the authentication program 51 or the authorization program 52. The setting parameters contained in the setting information table 56 are registered by the administrator of the storage device 1 in advance.

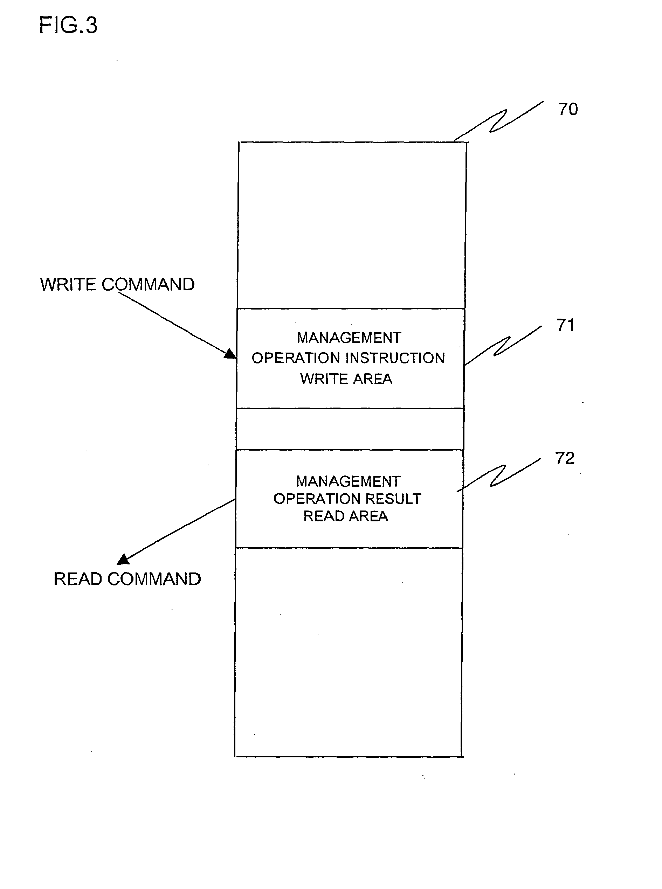

Fig. 3 illustrates an example of an address space 70 of the control volume 20 of the storage device 1. The address space 70 includes a management operation instruction write area 71 and a management operation result read area 72. The storage management program 60 of the host 40 sends a user authentication request instruction or a logical-volume management operation instruction to the storage device 1 as data to be written into the management operation instruction write area 71 of the control volume 20. The storage management program 60 also receives a user authentication result or a logical-volume management operation result from the storage device 1 as data read from the management operation result read area 72 of the control volume 20.

Fig. 4A illustrates an example of a write command or a read command sent from the storage management program 60 of the host 40 to the control volume 20 of the storage device 1 in the command frame format of the SCSI standards. In an operation code 80, the type of SCSI command, for example, a write command or a read command, is set. In a logical unit number (LUN) 81, the identifier of a logical volume on which the SCSI command is executed is set. When the storage management program 60 of the host 40 sends data to the control volume 20 of the storage device 1, the identifier of the control volume 20 is set in the LUN 81. In a logical address 82, the address of a data storage location in a logical volume is set as the position at which data is read or written. When the storage management program 60 of the host 40 writes a user authentication request instruction or a logical-volume management operation instruction, the address of the management operation instruction write area 71 of the control volume 20 is set in the logical address 82. When the storage management program 60 reads a user authentication result or a logical-volume management operation result, the address of the management operation result read area 72 of the control volume 20 is set in the logical address 82. In a transfer data length 83, the data length of data to be written or read, which is transferred after the command frame, is set.

Fig. 4B illustrates an example of the data format of a user authentication request instruction or a logical-volume management operation instruction sent from the storage management program 60 of the host 40 to the storage device 1. The data shown in Fig. 4B is sent from the host 40 to the storage device 1, as data to be written into the control volume 20, subsequent to the command frame shown in Fig. 4A. A user name 84 indicates the identifier of a user requested to conduct user authentication or management operation. An authentication information type 85 indicates the type of user authentication information sent from the host 40 to the storage device 1, i.e., the type of information used for authentication, such as a password, a digital certificate, a digital signature, or a session ID. Authentication information 86 indicates the user authentication information sent from the host 40 to the storage device 1, i.e., information used for conducting authentication, such as the hash value of a password, a digital certificate, a digital signature, or a session ID. A management operation instruction 87 indicates details of a management operation instruction, such as generating, copying, or formatting a logical volume, or a management operation complete request, made by the user. A management operation parameter 88 indicates parameter information related to the management operation instruction, for example, the identifier of a logical volume to be handled, made by the user.

Fig. 4C illustrates an example of the data format of a user authentication result or a logical-volume management operation result received by the storage management program 60 of the host 40 from the storage device 1. The data shown in Fig. 4C is sent from the storage device 1 to the host 40, as data read from the control volume 20, in response to the command frame shown in Fig. 4A. A malicious user may send a read command to the storage device 1 to read data from the management operation result read area 72 of the control volume 20. Accordingly, information that should not be disclosed to the third party, such as the session ID, contained in the data shown in Fig. 4C is protected by being encrypted. A user name 89 indicates the identifier of a user requested to conduct authentication or management operation. Result information 90 indicates details of the user authentication result or logical-volume management operation result, for example, the success or failure in the user authentication or the success or failure in the logical-volume management operation. A result parameter 91 indicates parameter information related to the user authentication result or the logical-volume management operation result, for example, the reason for the failure in the authentication, the session ID encrypted by the user password, or the reason for the failure in the management operation of the logical volume.

Fig. 4D illustrates an example of the data format of error flags used for temporarily storing the error condition when the authorization program 52 processes a logical-volume management operation instruction. A logical-volume management operation instruction processing flow is discussed below with reference to Fig. 10B. A user error flag 92 is set when a user name 200 contained in the row read from the authorization information table 55 by the authorization program 52 does not coincide with the user name 84 contained in the logical-volume management operation instruction. A management operation instruction error flag 93 is set when a management operation instruction 201 contained in the row read from the authorization information table 55 by the authorization program 52 does not coincide with the management operation instruction 87 contained in the logical-volume management operation instruction. A management operation object error flag 94 is set when a management operation object 202 contained in the row read from the authorization information table 55 by the authorization program 52 does not coincide with the management operation parameter 88 contained in the logical-volume management operation instruction.

Fig. 5 illustrates an example of the authentication information table 54. In the authentication information table 54, authentication-related information set for each user is stored. The user authentication-related information includes the following fields. A user name 100 indicates the identifier of the user. An authentication information type 101 indicates the type of authentication information, such as a password or a digital certificate, set for the user. Authentication information 102 indicates authentication information set for the user, such as a password value or digital certificate data. A session ID 103 indicates a session ID dynamically assigned to the user by the authentication program 51. A session-ID generated time 104 indicates the time when the authentication program 51 assigned the session ID to the user.

Fig. 6 illustrates an example of the authorization information table 55. In the authorization information table 55, user right-related information set for each user is stored. The user right-related information includes the following fields. The user name 200 indicates the identifier of the user. The management operation instruction indicates a management operation instruction, for example, generating, copying, or formatting a logical volume, permitted for the user. The management operation object 202 indicates the management operation object, for example, the identifier of a logical volume, on which the user is permitted to execute the management operation instruction 201.

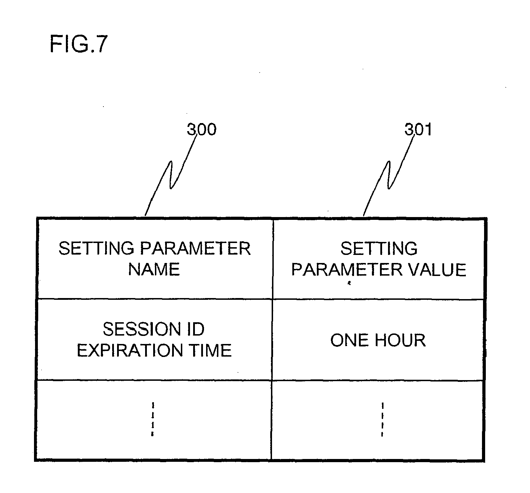

Fig. 7 illustrates an example of the setting information table 56. In the setting information table 56, setting parameters required for the operations of the authentication program 51 and the authorization program 52 are stored. A setting parameter name 300 indicates the identifier of a setting parameter. A setting parameter value 301 indicates the value of the setting parameter, and in this embodiment, the expiration time of the session ID is stored.

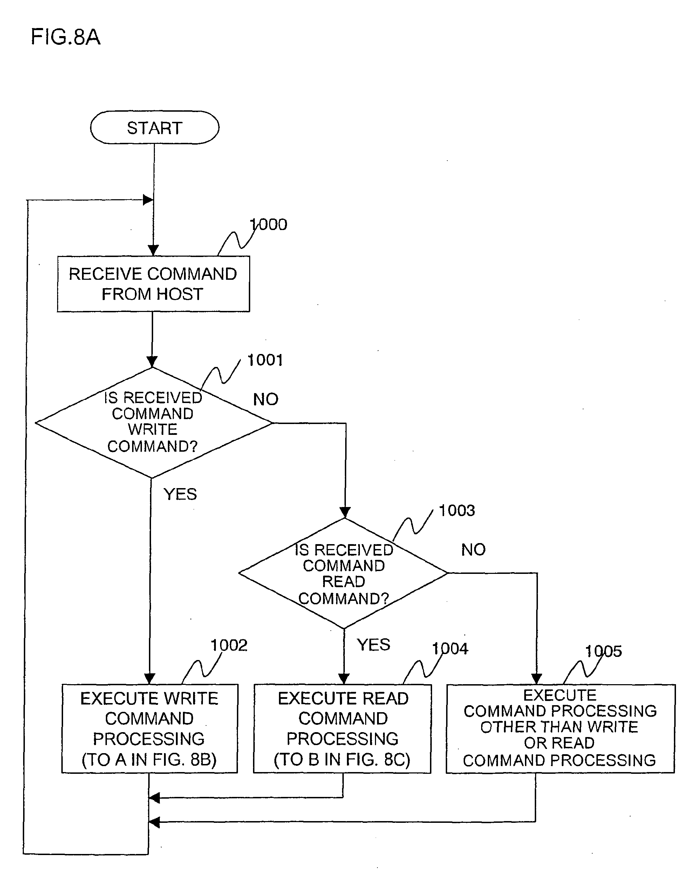

Fig. 8A is a flowchart illustrating an example of the dispatch processing procedure for a write command and a read command by the I/O request processing program 50. The I/O request processing program 50 is run together with the storage device 1 and starts performing dispatch processing.

In step 1000, the I/O request processing program 50 receives a command frame from the host. In step 1001, the I/O request processing program 50 then determines whether the command is a write command by checking the operation code 80 contained in the command frame.

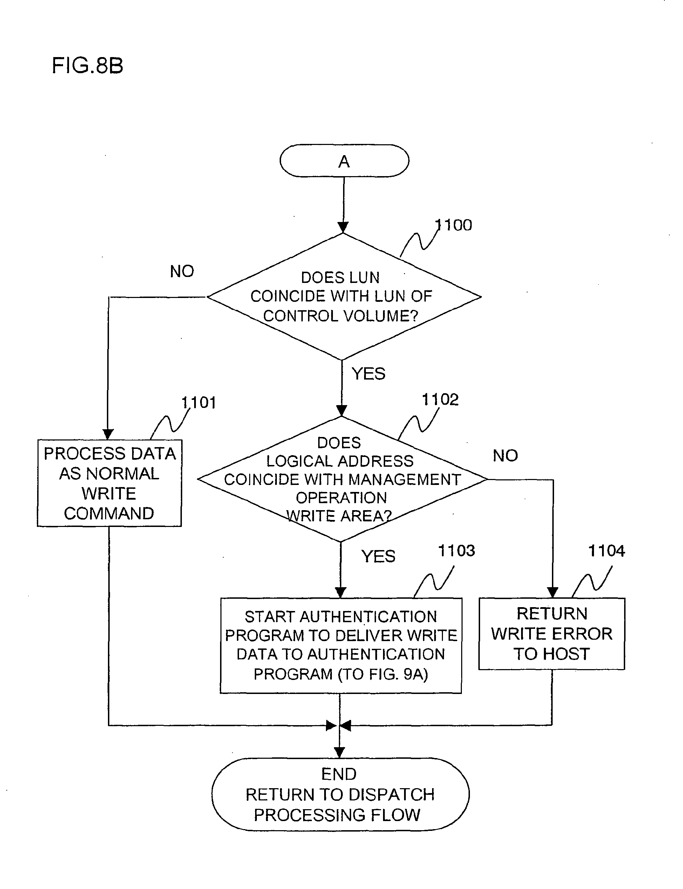

If it is determined in step 1001 that the command received from the host is a write command, in step 1002, the I/O request processing program 50 executes write command processing. The write command processing is described below with reference to Fig. 8B.

If it is determined in step 1001 that the command received from the host is not a write command, the process proceeds to step 1003 to determine whether the command is a read command by checking the operation code 80 contained in the command frame.

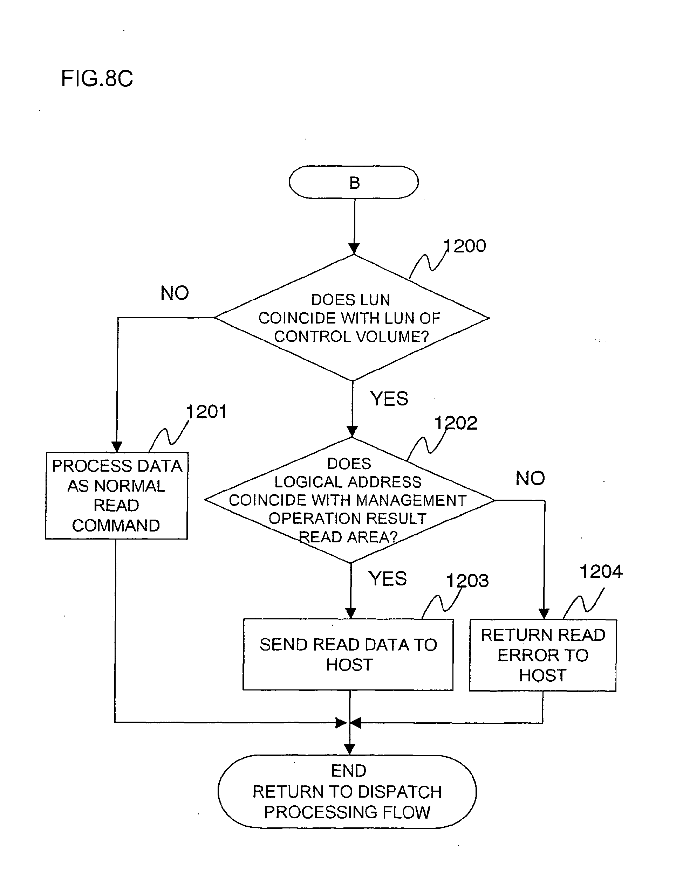

If it is determined in step 1003 that the command received from the host is a read command, in step 1004, the I/O request processing program 50 executes read command processing. The read command processing is discussed below with reference to Fig. 8C.

If it is determined in step 1003 that the command received from the host is not a read command, in step 1005, the I/O request processing program 50 executes command processing other than the write or read command processing.

Fig. 8B is a flowchart illustrating an example of the write command processing procedure performed by the I/O request processing program 50.

In step 1100, the I/O request processing program 50 checks the LUN 81 in the command frame to determine whether the LUN 81 coincides with the identifier of the control volume 20.

If it is determined in step 1100 that the LUN 81 in the command frame is the same as the identifier of the control volume 20, in step 1102, the I/O request processing program 50 checks the logical address 82 in the command frame to determine whether the logical address 82 coincides with the management operation instruction write area 71 of the control volume 20.

If it is determined in step 1102 that the logical address 82 in the command frame is the same as the management operation instruction write area 71 of the control volume 20, the process proceeds to step 1103. In step 1103, the I/O request processing program 50 determines that the command is an authentication request instruction or a logical-volume management operation instruction, and receives the data sent subsequent to the command frame from the host 40 to the storage device 1 and stores it in the memory. The I/O request processing program 50 then starts the authentication program 51 and delivers the pointer indicating the position of the data in the memory to the authentication program 51. The write command processing is then completed.

If it is determined in step 1102 that the logical address 82 in the command frame is different from the management operation instruction write area 71 of the control volume 20, in step 1104, the I/O request processing program 50 returns a write error to the host 40.

If it is determined in step 1100 that the LUN 81 in the command frame is different from the identifier of the control volume 20, in step 1101, the I/O request processing program 50 determines that the command is a normal write command, and processes the data sent subsequent to the command frame from the host 40 to the storage device 1 as normal write data. The write command processing is then completed.

Fig. 8C is a flowchart illustrating an example of the read command processing procedure performed by the I/O request processing program 50.

In step 1200, the I/O request processing program 50 checks the LUN 81 in the command frame to determine whether the LUN 81 coincides with the identifier of the control volume 20.

If it is determined in step 1200 that the LUN 81 in the command frame is the same as the identifier of the control volume 20, in step 1202, the I/O request processing program 50 checks the logical address 82 in the command frame to determine whether the logical address 82 coincides with the management operation result read area 72 of the control volume 20.

If it is determined in step 1202 that the logical address 82 in the command frame is the same as the management operation result read area 72 of the control volume 20, the process proceeds to step 1203. In step 1203, the I/O request processing program 50 determines that the command is a request to send an authentication result or a logical-volume management operation result, and sends data stored in the management operation result read area 72 subsequent to the command frame form the host 40 to the storage device 1. The read command processing is then completed.

If it is determined in step 1202 that the logical address 82 in the command frame is different from the management operation result read area 72 of the control volume 20, in step 1204, the I/O request processing program 50 returns a read error to the host 40.

If it is determined in step 1200 that the LUN 81 in the command frame is different from the identifier of the control volume 20, in step 1201, the I/O request processing program 50 determines that the command is a normal read command, and processes the data sent subsequent to the command frame from the storage device 1 to the host 40 as normal read data. The read command processing is then completed.

Fig. 9A is a flowchart illustrating an example of the session ID processing procedure by the authentication program 51 in this embodiment.

In step 1300, the authentication program 51 is started by the I/O request processing program 50 to read setting parameters, such as the expiration time of the session ID, from the setting information table 56.

In step 1301, the authentication program 51 receives the pointer indicating the position in the memory of the data storing a user authentication request instruction or a logical-volume management operation instruction from the I/O request processing program 50, and searches the authentication information table 54 by using the user name 84 contained in the data as the key.

In step 1302, the authentication program 51 extracts the corresponding row of the authentication information table 54 by using the user name 84 as the key to determine whether the user name 84 is stored in the authentication information table 54.

If it is determined in step 1302 that the user name 84 is stored in the authentication information table 54, in step 1303, the authentication program 51 refers to the authentication information type 85 contained in the data to determine whether the authentication information 86 is the session ID.

If it is determined in step 1302 that the user name 84 is not stored in the authentication information table 54, in step 1308, the authentication program 51 sets authentication results in the management operation result read area 72 according to the data format shown in Fig. 4C. The session ID processing is then completed. As the authentication results, for example, the user name 84 contained in the data is stored in the user name 89. Error information indicating the failure in authentication is stored in the result information 90. An error reason that the user name does not exist is stored in the result parameter 91.

If it is determined in step 1303 that the authentication information 86 contained in the data is the session ID, the authentication program 51 verifies in step 1304 the validity of the session ID by checking whether the authentication information 86 coincides with the session ID 103 contained in the row extracted from the authentication information table 54 in step 1302.

If it is determined in step 1304 that the validity of the session ID is verified, in step 1305, the authentication program 51 refers to the session-ID generated time 104 contained in the row extracted from the authentication information table 54 in step 1302. Then, the authentication program 51 subtracts the session-ID generated time 104 from the current time to determine whether the session ID is within the expiration time by determining whether the subtracted value is smaller than the expiration time of the session ID read from the setting information table 56 in step 1300.

If it is determined in step 1305 that the session ID contained in the data is within the expiration time, in step 1306, the authentication program 51 starts the authorization program 52 to deliver the pointer indicating the position of the data in the memory to the authorization program 52. The session ID processing is then completed. The operation of the authorization program 52 is discussed below with reference to Figs. 10A and 10B.

If it is determined in step 1305 that the session ID is not within the expiration time, in step 1307, the authentication program 51 searches the authentication information table 54 by using the user name 84 contained in the data as the key, and clears the session ID 103 and the session-ID generated time 104 of the corresponding row. Then, in step 1308, the authentication program 51 stores authentication results in the management operation result read area 72 according to the data format shown in Fig. 4C. The session ID processing is then completed. As the authentication results, for example, the user name 84 is stored in the user name 89, error information indicating the failure in authentication is stored in the result information 90, and an error reason that the session ID has expired is stored in the result parameter 91.

If it is determined in step 1303 that the authentication information 86 contained in the data is not the session ID, in step 1309, the authentication program 51 executes authentication processing in accordance with the authentication information type 85. The session ID processing is then completed. The authentication processing flow is discussed below with reference to Fig. 9B.

Fig. 9B is a flowchart illustrating an example of the authentication processing procedure by the authentication program 51 when the authentication information type 85 is a password.

In step 1310, the authentication program 51 extracts the authentication information 102 contained in the row extracted from the authentication information table 54 in step 1302.

In step 1311, the authentication program 51 calculates the hash value of the password stored in the authentication information 102 and compares the calculated hash value with the value of the authentication information 86 in the data. Then, the authentication program 51 determines in step 1312 whether authentication has succeeded based on a comparison result of the hash value with the authentication information 86.

If it is determined in step 1312 that authentication has succeeded, in step 1313, the authentication program 51 generates a random value as the session ID. Then, the authentication program 51 searches the authentication information table 54 by using the user name 84 as the key to set the generated session ID in the session ID 103 of the corresponding row and sets the time when the session ID was generated in the session-ID generated time 104.

In step 1314, the authentication program 51 encrypts the session ID generated in step 1313 by using the authentication information 102 contained in the row extracted from the authentication information table 54 in step 1302. Then, the authentication program 51 sets authentication results in the management operation result read area 72 according to the data format shown in Fig. 4C. The authentication processing is then completed. As the authentication results, for example, the user name 84 is stored in the user name 89, result information indicating the success in authentication is stored in the result information 90, and the encrypted session ID is stored in the result parameter 91. The reason for encrypting the session ID is to prevent spoofing by reading the session ID stored in the management operation result read area 72 by a malicious user different from the user who has sent, for example, an authentication request instruction.

If it is determined in step 1312 that authentication has failed, in step 1315, the authentication program 51 sets authentication results in the management operation result read area 72 according to the data format shown in Fig. 4C. The authentication processing is then completed. As the authentication results, for example, the user name 84 is stored in the user name 89, error information indicating the failure in authentication is stored in the result information 90, and an error reason indicating that the authentication information has not been verified is stored in the result parameter 91.

Fig. 10A is a flowchart illustrating an example of the management operation completion request processing performed by the authorization program 52.

In step 1400, the authorization program 52 is started by the authentication program 51 to receive from the authentication program 51 the pointer indicating the position in the memory of the data storing a logical-volume management operation instruction. In step 1401, the authorization program 52 determines whether the management operation instruction 87 contained in the data is a management operation completion request.

If it is determined in step 1401 that the management operation instruction 87 is a management operation completion request, in step 1402, the authorization program 52 clears the management operation result read area 72. Then, in step 1403, the authorization program 52 searches the authentication information table 54 by using the user name 84 as the key to clear the session ID 103 and the session-ID generated time 104 in the corresponding row. The processing is then completed.

If it is determined in step 1401 that the management operation instruction 87 is not a management operation completion request, the authorization program 52 executes management operation authorization processing to check the user execution right. The management operation authorization processing is discussed below with reference to Fig. 10B.

Fig. 10B is a flowchart illustrating an example of the management operation authorization processing performed by the authorization program 52 in this embodiment.

In step 1404, the authorization program 52 resets the error flags shown in Fig. 4D as the initialization setting. The error flags include the user error flag 92, the management operation instruction error flag 93, and the management operation object error flag 94.

In step 1405, the authorization program 52 reads the first row of the authorization information table 55. In step 1406, the authorization program 52 determines whether the user name 200 contained in the row read from the authorization information table 55 in step 1405 coincides with the user name 84 contained in the data received from the authentication program 51 in step 1400.

If it is determined in step 1406 that the user name 200 is the same as the user name 84, the authorization program 52 determines in step 1407 whether the management operation instruction 201 of the first row of the authorization information table 55 read in step 1405 coincides with the management operation instruction 87 in the data received from the authorization program 51 in step 1400.

If it is determined in step 1407 that the management operation instruction 201 is the same as the management operation instruction 87, the authorization program 52 determines in step 1408 whether the management operation object 202 of the first row of the authorization information table 55 read in step 1405 coincides with the management operation parameter 88 in the data received from the authentication program 51 in step 1400.

If it is determined in step 1408 that the management operation object 202 is the same as the management operation parameter 88, the process proceeds to step 1409. In step 1409, the authorization program 52 starts the volume control program 53 to deliver the pointer indicating the position in the memory of the data received from the authentication program 51 in step 1400 to the volume control program 53, and stores authorization results in the management operation result read area 72 according to the data format shown in Fig. 4C. The processing is then completed. As the authorization results, for example, the user name 84 in the data is stored in the user name 89, error information indicating the success in authorization is stored in the result information 90, and the time when the authorization processing was finished is stored in the result parameter 91.

If it is determined in step 1406 that the two user names are different, in step 1410, the authorization program 52 sets the user error flag 92 and proceeds to step 1413.

If it is determined in step 1407 that the two management operation instructions are different, in step 1411, the authorization program 52 sets the management operation instruction error flag 93 and proceeds to step 1413.

If it is determined in step 1408 that the management operation object is different from the management operation parameter, in step 1412, the authorization program 52 sets the management operation object error flag 94 and proceeds to step 1413.

In step 1413, the authorization program 52 determines whether the authorization information table 55 has reached the end row. If it is determined in step 1413 that the authorization information table 55 has reached the end row, in step 1414, the authorization program 52 stores error information based on the error flags in the management operation result read area 72 according to the data format shown in Fig. 4C. The processing is then completed. As the error information, the user name 84 in the data is stored in the user name 89, and error information indicating the failure in authorization is stored in the result information 90. If the user error flag 92 is set, an error reason that the user does not exist is stored in the result parameter 91. If the management operation instruction error flag 93 is set, an error reason that the management operation is not permitted is set in the result parameter 91. If the management operation object error flag 94 is set, an error reason that the management operation for the management operation object is not permitted is stored in the result parameter 91.

If it is determined in step 1413 that the authorization information table 55 has not reached the end row, in step 1415, the authorization program 52 reads the subsequent row of the authorization information table 55. The authorization program 52 returns to step 1406 until it is determined in step 1413 that the authorization information table 55 has reached the end row.

As described above, according to the first embodiment, by reading or writing the control volume 20, the storage device 1 can authenticate a user who attempts to handle the management of a logical volume. The storage device 1 can also restrict the content or the object of logical-volume management operation according to the user. Additionally, by using a temporary session ID after conducting user authentication, a plurality of management handing instructions executed after user authentication can be managed by one session. According to this session management, complicated management operation composed by a plurality of management operation instructions can be implemented, and also, the load caused by on authentication processing for a plurality of management operation instructions can be reduced.

### Second Embodiment

A storage system similar to that shown in Fig. 1 according to a second embodiment of the present invention is described below. It should be noted that the second embodiment is similar to the first embodiment unless otherwise stated.

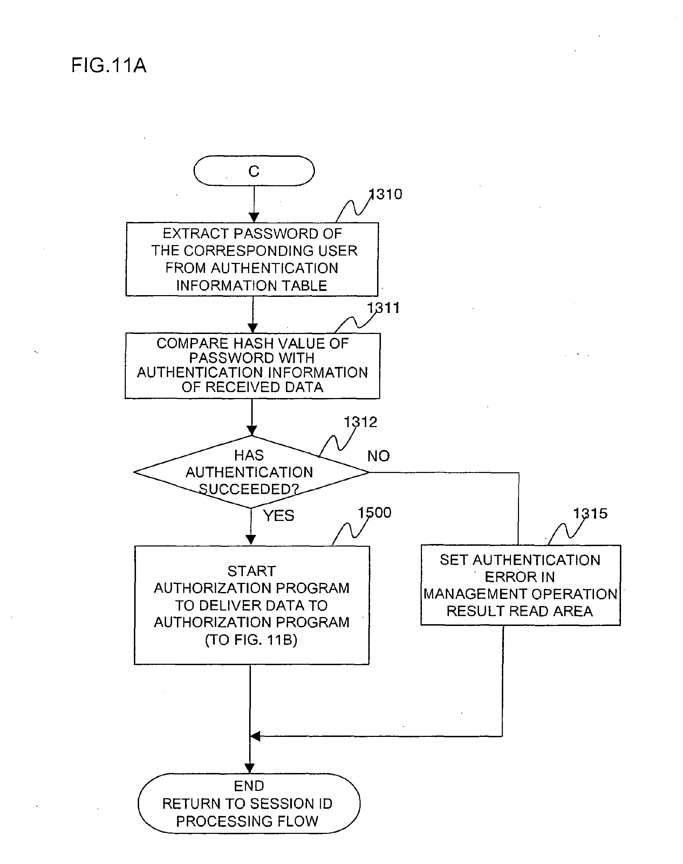

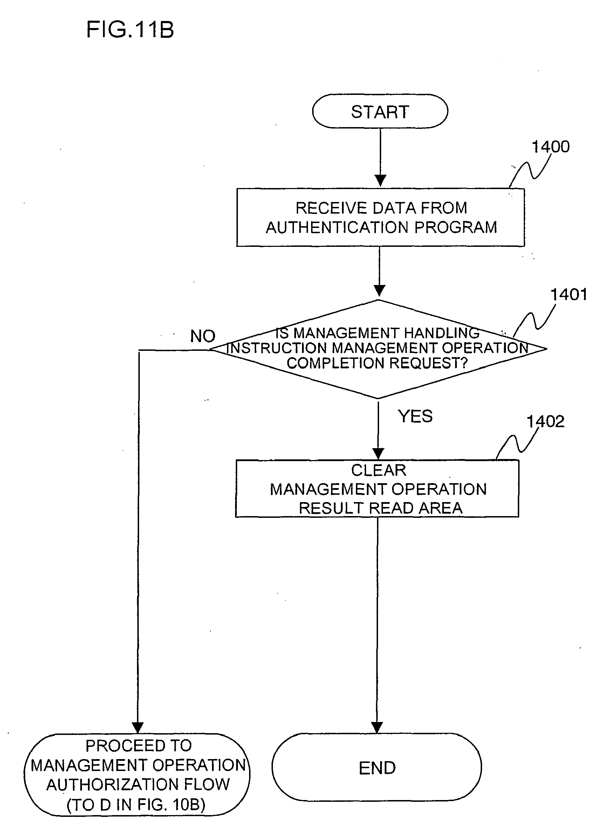

The second embodiment is different from the first embodiment in that the authentication program 51 executes authentication processing according to the flowchart shown in Fig. 11A instead of the flowchart shown in Fig. 9B and that the authorization program 52 executes management operation completion request processing according to the flowchart shown in Fig. 11B instead of the flowchart in Fig. 10A.

Fig. 11A is a flowchart illustrating an example of the authentication processing procedure performed by the authentication program 51 when the authentication information type 85 is a password.

In this embodiment, the storage management program 60 of the host 40 sends both the authentication request instruction containing authentication information other than a session ID, for example, a password, and a logical-volume management operation instruction in the data format shown in Fig. 4B to the storage device 1. When authentication has succeeded by the use of the authentication information contained in the data, the authentication program 51 immediately starts the authorization program 52 without providing a session ID to the storage management program 60, and the authorization program 52 performs logical-volume management operation instruction processing contained in the data. Steps 1310 through 1312 for determining whether authentication has succeeded and step 1315 are the same as those of the first embodiment.

If it is determined in step 1312 that authentication has succeeded, in step 1500, the authentication program 51 starts the authorization program 52 to deliver the pointer indicating the position of the data in the memory to the authorization program 52, and the process is then completed.

Fig. 11B is a flowchart illustrating an example of the management operation completion request processing procedure performed by the authorization program 52 in this embodiment.

As discussed with reference to Fig. 11A, in this embodiment, the authentication program 51 does not set the session ID and the session-ID generated time in the authentication information table 54 in the authentication processing flow. Accordingly, when executing the management operation completion processing, the authorization program 52 omits step 1403 in Fig. 10A in which the session ID 103 and the session-ID generated time 104 in the authentication information table 54 are cleared. Instead, the authorization program 52 clears the management operation result read area 72 in step 1402 in Fig. 11B, and then completes the processing.

As in the first embodiment, according to the second embodiment, the storage device 1 can authenticate a user who attempts to handle the management of a logical volume. The storage device 1 can also authorize the content or the object of logical-volume management operation conducted by the user. Additionally, by conducting authentication for the user and authorization for logical-volume management operation at the same time, the user can be authenticated according to each management operation instruction. Without processing for generating and managing a session ID, the load caused by processing required for authentication and authorization can be reduced when the user does not continuously execute a plurality of management operation instructions.

In the first and second embodiments, a password is used as the user authentication information by way of example. However, the present invention is not restricted to this type of authentication information, and a digital certificate or a digital signature may be used as the user authentication information for authenticating the user by the storage device 1.

Although in the first and second embodiments tables are used as the information storage format, another format may be used for storing information.

In the first and second embodiments, an authentication request instruction or a management operation instruction, and an authentication result or a management operation result are stored in specific areas of the control volume 20, which is a logical volume. Alternatively, the areas of the control volume 20 may be handled as virtual areas without actually storing the above-described information in the areas of the control volume 20.

Examples of the present invention have been described through the first and second embodiments. However, various modifications may be made to the present invention including the following:
According to a first modified example of the present invention, in the computer system, the storage device stores user authentication result information in a specific area of a specific logical volume or a different logical volume, and the computer receives the user authentication result information stored in the specific area of the specific logical volume or the different logical volume.
According to a second modified example of the present invention, there is provided a storage device connected to a computer via a network. The storage device includes a logical volume storing user authentication information for authenticating a user of the computer in a specific area of the logical volume, thereby authenticating the user based on the user authentication information stored by writing data into the specific area of the logical volume.
According to a third modified example of the present invention, the storage device includes the logical volume storing user authentication result information in a specific area of the logical volume.
According to a fourth modified example of the present invention, in the storage device, a logical-volume management operation instruction and a management operation object sent from the computer by writing data into the specific area of the logical volume are authorized according to a right given to the user.
According to a fifth modified example of the present invention, user authentication result information or authorization result information for the management operation instruction is sent to the computer by reading data from a specific area of the logical volume.
According to a sixth modified example of the present invention, in the storage device, when user authentication result information or authorization result information for the management operation instruction is sent to the computer by reading data from a specific area of the logical volume, data obtained by encrypting the user authentication result information by using the user authentication information is sent to the computer.
According to a seventh modified example of the present invention, in the storage device, user authentication result information is deleted in response to an instruction from the computer.
According to an eighth modified example of the present invention, the storage device includes a CPU, a memory, and a logical volume set. The memory includes an authentication program, an authorization program, a volume control program, an authentication information table, an authorization information table, and a setting information table, and one logical volume of the logical volume set includes a management operation instruction write area for storing the user authentication information and a management operation result read area for storing user authentication result information.
According to a ninth modified example of the present invention, there is provided computer software stored in a computer connected to a storage device via a network. The computer software includes a program for allowing the computer to send user authentication information for authenticating a user of the computer so that the user authentication information is stored in a specific area of a specific logical volume in the storage device to allow the storage device to authenticate the user based on the user authentication information.
According to a tenth modified example of the present invention, in the computer software, the program allows the computer to read user authentication result information stored in a specific area of the specific logical volume or a different logical volume of the storage device.
According to an eleventh modified example of the present invention, there is provided a storage-controlled administrator authentication method for a computer system which includes a computer and a storage device connected to the computer via a network. The storage-controlled administrator authentication method includes: sending by the computer user authentication information for authenticating a user of the computer so that the user authentication information is written into a specific area of a specific logical volume in the storage device; and authenticating the user by the storage device based on the user authentication information stored in the specific area of the specific logical volume.

## Claims

1. A computer system comprising:
a computer; and
a storage device connected to the computer via a network,
wherein the computer sends user authentication information for authenticating a user of the computer so that the user authentication information is written into a specific area of a specific logical volume in the storage device, and the storage device authenticates the user based on the user authentication information stored in the specific area of the specific logical volume in the storage device.

2. The computer system according to claim 1, wherein the storage device stores user authentication result information in a specific area of the specific logical volume or a different logical volume, and the computer receives the user authentication result information stored in the specific area of the specific logical volume or the different logical volume.

3. A storage device connected to a computer via a network, comprising a logical volume storing user authentication information for authenticating a user of the computer in a specific area of the logical volume, thereby authenticating the user based on the user authentication information stored by writing data into the specific area of the logical volume.

4. The storage device according to claim 3, comprising the logical volume storing user authentication result information in a specific area of the logical volume.

5. The storage device according to claim 3 or claim 4,
wherein a logical-volume management operation instruction and a management operation object sent from the computer by writing data into the specific area of the logical volume are authorized according to a right given to the user.

6. The storage device according to any one of claims 3 to 5, wherein user authentication result information or authorization result information for the management operation instruction is sent to the computer by reading data from a specific area of the logical volume.

7. The storage device according to claim 6, wherein, when user authentication result information or authorization result information for the management operation instruction is sent to the computer by reading data from a specific area of the logical volume, data obtained by encrypting the user authentication result information by using the user authentication information is sent to the computer.

8. The storage device according to any one of claims 3 to 7, wherein user authentication result information is deleted in response to an instruction from the computer.

9. The storage device according to any one of claims 3 to 8, comprising:
a central processing unit;
a memory; and
a logical volume set,
wherein the memory includes an authentication program, an authorization program, a volume control program, an authentication information table, an authorization information table, and a setting information table, and one logical volume of the logical volume set includes a management operation instruction write area for storing the user authentication information and a management operation result read area for storing user authentication result information.

10. Computer software stored in a computer connected to a storage device via a network, comprising a program for allowing the computer to send user authentication information for authenticating a user of the computer so that the user authentication information is stored in a specific area of a specific logical volume in the storage device to allow the storage device to authenticate the user based on the user authentication information.

11. The computer software according to claim 10, wherein the program allows the computer to read user authentication result information stored in a specific area of the specific logical volume or a different logical volume of the storage device.

12. A storage administrator authentication method for a computer system which comprises a computer and a storage device connected to the computer via a network, the storage administrator authentication method comprising:
sending by the computer user authentication information for authenticating a user of the computer so that the user authentication information is written into a specific area of a specific logical volume in the storage device; and
authenticating the user by the storage device based on the user authentication information stored in the specific area of the specific logical volume.
